# EUROPÄISCHE PATENTANMELDUNG

(11) **EP 1 864 705 A1**
(43) Veröffentlichungstag der Anmeldung: **12.12.2007**
(21) Anmeldenummer: 07004022.5
(22) Anmeldetag: 27.02.2007
(51) Int. Cl.: A63H 33/10

(54) **Rastverbindung und Bausystem**

(30) Priorität: 08.06.2006 DE 202006009036 U
(71) Anmelder: Schleich GmbH, 73527 Schwäbisch Gmünd (DE)
(72) Erfinder: Blattner, Axel, 70176 Stuttgard (DE); Mainka, Hubert, 73431 Aalen (DE); Kugler, Bernd, 73529 Schwäbisch Gmünd (DE)
(74) Vertreter: Müller, Frank Peter

(57) **Zusammenfassung**

Die vorliegende Erfindung betrifft eine Rastverbindung für Bauelemente mit einem Bauelement, das mit einem Basiselement verbindbar ist, indem ein erstes Rastelement (7) des Bauelements mit einem zweiten Rastelement (5) des Basiselements in Eingriff bringbar ist, wobei sich das zweite Rastelement (5) innerhalb einer Öffnung (3) im Basiselement (2) befindet, wobei das erste Rastelement (7) einen wulstartigen Vorsprung mit einem bestimmten Wulstdurchmesser (P1) und das zweite Rastelement (5) einen steg- oder absatzförmigen Vorsprung an mindestens einer Wand (6) der Öffnung (3) aufweist und wobei die Öffnung (3) vorzugsweise sechs Wände (6) aufweist, die die steg- oder absatzförmigen Vorsprünge jeweils an zwei sich gegenüber liegenden Wänden (6) aufweisen.

## Beschreibung

Die vorliegende Erfindung betrifft eine Rastverbindung für Bauelemente zur Verbindung eines Bauelements mit einem Basiselement nach dem Oberbegriff des Schutzanspruchs 1, ein hierfür geeignetes Bauelement nach dem Schutzanspruch 12, ein hierfür geeignetes Basiselement nach dem Schutzanspruch 13 und ein Bausystem, das sich aus den entsprechenden Elementen zusammensetzt, nach Schutzanspruch 14.

Derartige Rastverbindungen sind beispielsweise aus der EP 0 728 507 B1 bekannt, die ein baukastenartiges Spielsystem zur Erstellung von Gebäuden, Fahrzeugaufbauten, Landschaften usw. beschreibt, wobei ein Bauelement aus Kunststoff auf ein Basiselement mittels einer Rast-Steck-Verbindung aufgebracht werden kann. Zur Verbindung dient ein Verbindungselement, das auf der einen Seite gestützte Zapfen zur lösbaren Rastverbindung mit dem Bauelement und auf der anderen Seite nutförmige Vorsprünge zur Rastverbindung mit dem Basiselement aufweist. Zur Rastverbindung sind im Basiselement Öffnungen mit Seitenwänden vorgesehen, wobei an zwei einander gegenüber liegenden Seitenwänden Rastausnehmungen ausgebildet sind. Die Zapfen des Verbindungselements greifen in die entsprechenden Ausnehmungen der Seitenwände ein. Dabei sind an sich gegenüber liegenden Seitenwänden Ausnehmungen angebracht, die die wulstförmigen Zapfenenden aufnehmen und eine leichte Lösbarkeit der Verbindung gewährleisten. In den zwei anderen einander gegenüber liegenden Seitenwänden der im Wesentlichen rechteckförmigen Ausnehmungen des Basiselements befinden sich Hinterschneidungen, in die nutförmige Rastelemente eingreifen, um so eine sehr feste und nur schwer lösbare Verbindung herzustellen.

Der vorliegenden Erfindung liegt nun die Aufgabe zugrunde, eine Rastverbindung für Bauelemente anzugeben, die nicht nur eine Drehung des Bauelements relativ zum Basiselement zulässt, sondern die auch eine sichere Verbindung zwischen den Elementen gewährleistet, ohne dass ein anschließendes Auseinandernehmen besonders hohe Anstrengungen erfordert. Gleichzeitig soll das Bausystem schnell und günstig herstellbar sein und möglichst wenig Einzelteile aufweisen, d.h. insbesondere keine separaten Verbindungselemente zur Verbindung des Bauelements mit dem Basiselement.

Die Erfindung löst diese Aufgaben durch die kennzeichnenden Merkmale der unabhängigen Schutzansprüche 1, 12, 13 und 14. Vorteilhafte Ausgestaltungen der Rastverbindung ergeben sich aus den Unteransprüchen 2 bis 11.

Nach der vorliegenden Erfindung weist die Rastverbindung für Bauelemente ein erstes Rastelement auf, das am Bauelement befestigt ist und das mit einem zweiten Rastelement des Basiselements in Eingriff bringbar ist. Zu diesem Zweck wird das erste Rastelement in eine Öffnung des Basiselements eingebracht, in der sich das zweite Rastelement befindet. Dabei weist das erste Rastelement einen wulstartigen Vorsprung mit einem vorgegebenen Wulstdurchmesser auf, während das zweite Rastelement einen steg- oder absatzförmigen Vorsprung an mindestens einer Wand der Öffnung im Basiselement aufweist. Der wulstartige Vorsprung des ersten Rastelements kommt dabei mit dem steg- oder absatzförmigen Vorsprung des zweiten Rastelements in Eingriff und wird dort verriegelt.

Der Rastabstand zwischen dem mindestens einen steg- oder absatzförmigen Vorsprung und der innerhalb der Öffnung gegenüberliegenden Wand ist insbesondere kleiner oder gleich als der Wulstdurchmesser, so dass eine Presspassung bzw. eine Schnappverbindung dann entsteht, wenn der wulstartige Vorsprung hinter den steg- oder absatzförmigen Vorsprung innerhalb der Öffnung beim Einsetzen zu liegen kommt. Mit Vorteil hat das zweite Rastelement dabei mindestens zwei steg- oder absatzförmige Vorsprünge an jeweils einer Wand der Öffnung innerhalb des Basiselements.

Die mindestens zwei steg- oder absatzförmigen Vorsprünge an jeweils sich gegenüberliegenden Wänden der Öffnung weisen nach einer bevorzugten Ausführungsform der Erfindung Rastabstände auf, die kleiner oder gleich sind als der Wulstdurchmesser des wulstartigen Vorsprungs des ersten Rastelements, wobei dieser Rastabstand zwischen den mindestens zwei gegenüberliegenden steg- oder absatzförmigen Vorsprüngen gemessen wird. Die stegoder absatzförmigen Vorsprünge erstrecken sich dabei innerhalb der Öffnung über eine Absatztiefe hinweg, die insbesondere kleiner ist als die Öffnungstiefe der Öffnung. Der steg- oder absatzförmige Vorsprung befindet sich dabei an der dem einzusteckenden Bauelement zugewandten Seite der Öffnung, so dass beim Einsetzen des ersten Rastelements der wulstartige Vorsprung an dem steg- oder absatzförmigen Vorsprung entlang gleitet und bei Erreichen der Absatztiefe hinter dem Vorsprung zu liegen kommt.

Nach einer besonders bevorzugten Ausführungsform der vorliegenden Erfindung weist die Öffnung im Basiselement 6 Wände auf, wobei nur an zwei gegenüberliegenden Wänden die steg- oder absatzförmigen Vorsprünge des zweiten Rastelements zu liegen kommen.

Der wulstartige Vorsprung des ersten Rastelements erstreckt sich bevorzugt domförmig entlang eines Zapfens, der im Wesentlichen rechtwinklig vom Bauelement absteht. Bevorzugt ist der Zapfen und das Bauelement einstückig, insbesondere aus einem flexiblen Plastikmaterial hergestellt. Der Zapfen kann dabei rotationssymmetrisch mit einem Hohlraum ausgebildet sein, so dass sich die Zapfenwand beim Einrasten des Zapfens in das zweite Rastelement nach innen, d.h. in Richtung des Hohlraums verschiebt, um so ein Entlanggleiten des wulstartigen Vorsprungs an dem steg- oder absatzförmigen Vorsprungs des zweiten Rastelements zu ermöglichen. Nach dem vollständigen Einsetzen des Zapfens kommt der wulstartige Vorsprung hinter dem steg- oder absatzförmigen Vorsprung zu liegen, so dass eine Hinterschneidung am Zapfen den steg- oder absatzförmigen Vorsprung des zweiten Rastelements nach dem Einrasten aufnimmt, wobei die Hinterschneidung sich an der Außenseite der Zapfenwand zwischen dem wulstartigen Vorsprung des ersten Rastelements und dem Körper des Bauelements befindet.

Darüber hinaus beschreibt die vorliegende Erfindung ein Bauelement mit einem Zapfen, der ein erstes Rastelement aufweist, das aus einem wulstartigen Vorsprung mit einem Wulstdurchmesser besteht sowie aus einer Hinterschneidung, die sich an der Außenseite der Zapfenwand zwischen dem wulstartigen Vorsprung und dem Körper des Bauelements befindet. Gleichzeitig umfasst die Erfindung ein hierfür geeignetes Basiselement mit der Öffnung, wobei in der Öffnung ein zweites Rastelement angebracht ist, das aus einem bevorzugt aber zwei steg- oder absatzförmigen Vorsprüngen besteht, der an mindestens einer, bevorzugt zwei, gegenüberliegenden Wänden der Öffnung angebracht ist.

Schließlich beschreibt die Erfindung ein Bausystem mit einem Basiselement und einem Bauelement, wobei das Bauelement das erste Rastelement und das Basiselement das zweite Rastelement aufweist, die beim Einrasten die erfindungsgemäße Rastverbindung ergeben. Der Rastabstand zwischen dem steg- oder absatzförmigen Vorsprung und der innerhalb der Öffnung gegenüberliegenden Wände bzw. zwischen den gegenüberliegenden steg- oder absatzförmigen Vorsprüngen ist dabei kleiner oder gleich als der Wulstdurchmesser, so dass sich eine kraftschlüssige Verbindung ergibt.

Eine besonders bevorzugte Ausführungsform der vorliegenden Erfindung wird anhand der beigefügten Zeichnungen näher erläutert. Dabei zeigen:
- Figur 1a-d:: den Querschnitt, die Seitenansicht, die Aufsicht und Unteransicht eines erfindungsgemäßen Bauelements mit erstem Rastelement,
- Figur 2a-d:: den Querschnitt, die Ansicht, Aufsicht und Unteransicht eines erfindungsgemäßen Basiselements mit Öffnung und steg- bzw. absatzförmigen Vorsprung,
- Figur 3:: die dreidimensionale Ansicht des Bauelements mit erstem Rastelement,
- Figur 4:: die dreidimensionale Ansicht des Basiselements mit Öffnung, und
- Figur 5:: die dreidimensionale aufgeschnittene Ansicht der Rastverbindung, bei dem das Bauelement im Basiselement eingesetzt ist.

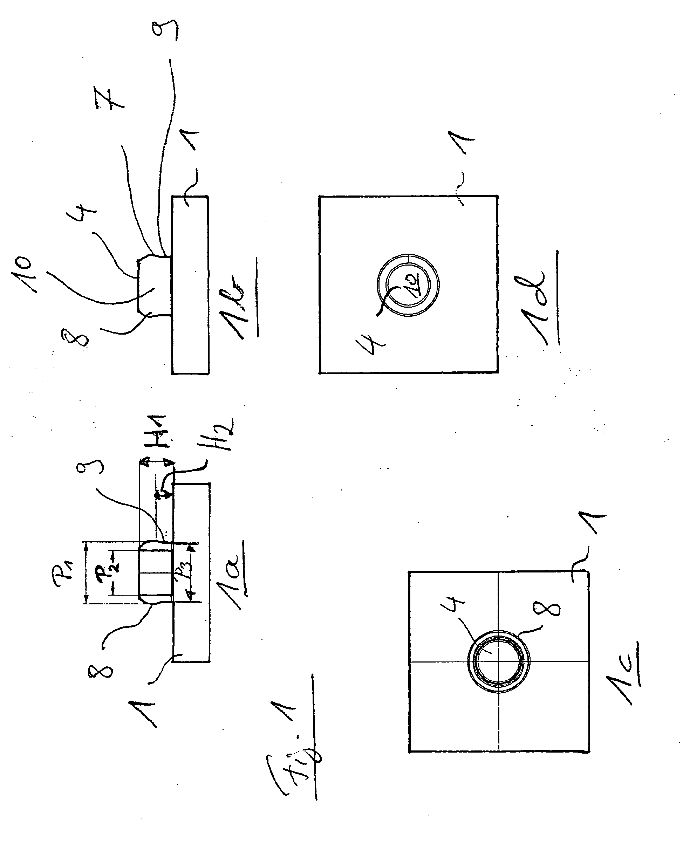

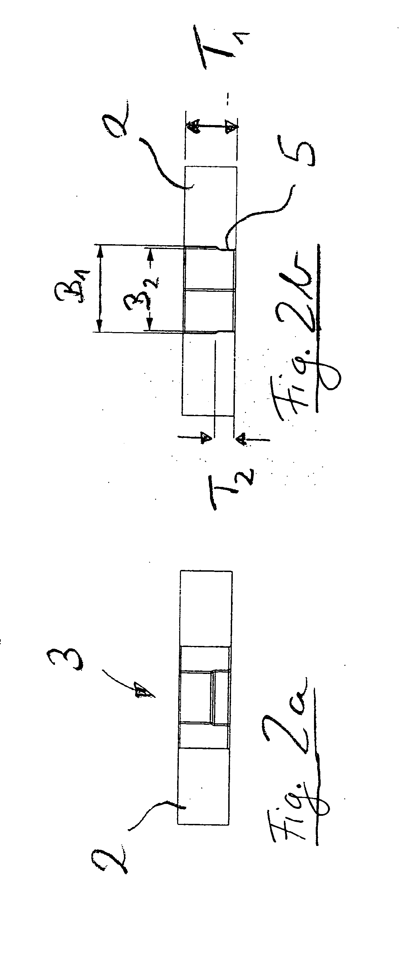

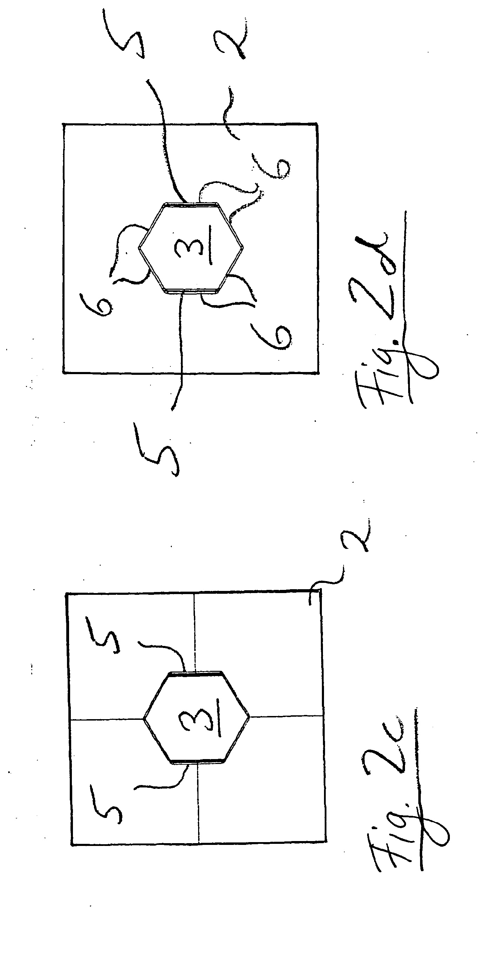

Figur 1a - d zeigt den Querschnitt, die Seitenansicht, die Aufsicht und die Unteransicht des erfindungsgemäßen Bauelements 1 mit ersten Rastelement 7, das in Form eines Zapfens einstückig am (teilweise) dargestellten Bauelement 1 angebracht ist. Der Zapfen befindet sich in der Figur dargestellt an der Oberseite des Bauelements 1 und ist rotationssymmetrisch mit einer Zapfenwand 8 ausgebildet, die im oberen Bereich des Zapfens 4, d.h. an der dem Bauelement 1 abgewandten Seite, wulstförmig ausgewölbt ist, so dass ein wulstartiger Vorsprung entsteht, der das erste Rastelement 7 bildet. Zwischen diesem wulstartigen Vorsprung und dem Bauelement 1 befindet sich eine Hinterschneidung 9, in die später der in Figur 2 gezeigte steg- oder absatzförmige Vorsprung zu liegen kommt.

Mit Vorteil weist der Zapfen 4 einen Hohlraum 10 auf, der ein Nachgeben der Zapfenwand 8 beim Einführen des Zapfens in die in Figur 2 gezeigte Öffnung 3 erleichtert. Zu diesem Zweck besteht die Zapfenwand 8 aus einem flexiblen, insbesondere Plastikmaterial, um ein entsprechendes Nachgeben beim Einführen zu ermöglichen. Wie in Figur 1 a dargestellt, hat der wulstartige Vorsprung einen ersten Durchmesser P1, der größer ist als der Hinterschneidungsdurchmesser P3, der wiederum größer ist als der Hohlraumdurchmesser P2, der an der Innenwand des Zapfens 4 gemessen wird.

Figur 2 zeigt den Querschnitt, die Ansicht, die Aufsicht und die Unteransicht des Basiselements 2 mit Öffnung 3 und zweitem Rastelement 5. Das zweite Rastelement 5 besteht aus einem in diesem Fall absatzförmigen Vorsprung, der sich von der Oberseite (in Figur 2b gezeigt befindet sich die Oberseite nach unten gekehrt) in das Innere der Öffnung 3 hinein bis zu einer Absatztiefe P2 hin erstreckt. Die Öffnung 3 hat eine Öffnungstiefe T1, die bevorzugt so groß ist, wie die Bauhöhe des Basiselements 2, d.h. es handelt sich um eine Durchgangsöffnung. Der Wandabstand B1 der einander gegenüberliegenden Wände der Öffnung 3 ist dabei größer als der Rastabstand B2, der zwischen einem steg- oder absatzförmigen Vorsprung und der gegenüberliegenden Wand bzw. zwischen zwei sich gegenüberliegenden steg- oder abatzförmigen Vorsprüngen gemessen wird. Der Wandabstand B1 ist bevorzugt gleich groß oder größer als der erste Durchmesser P1 des wulstartigen Vorsprungs des ersten Rastelements, während der Rastabstand B2 gleich groß oder größer ist als der Hinterschneidungsdurchmesser P3, allerdings kleiner als der erste Durchmesser P1. Dadurch kann der wulstartige Vorsprung des Zapfens 4 beim Einführen in die Öffnung 3 am Vorsprung 5 entlang gleiten und sich beim Erreichen der Absatztiefe T2 wieder entspannen. Die Absatztiefe T2 ist dabei bevorzugt gleich groß oder kleiner als die Hinterschneidungshöhe H2, während die Zapfenhöhe H1 kleiner oder gleich groß ist als die Öffnungstiefe T1.

Wie in Figur 2d gezeigt, besteht die Öffnung 3 aus sechs Wänden, wobei die zwei sich horizontal gegenüberliegenden Wände den absatzförmigen Vorsprung des zweiten Rastelements aufweisen.

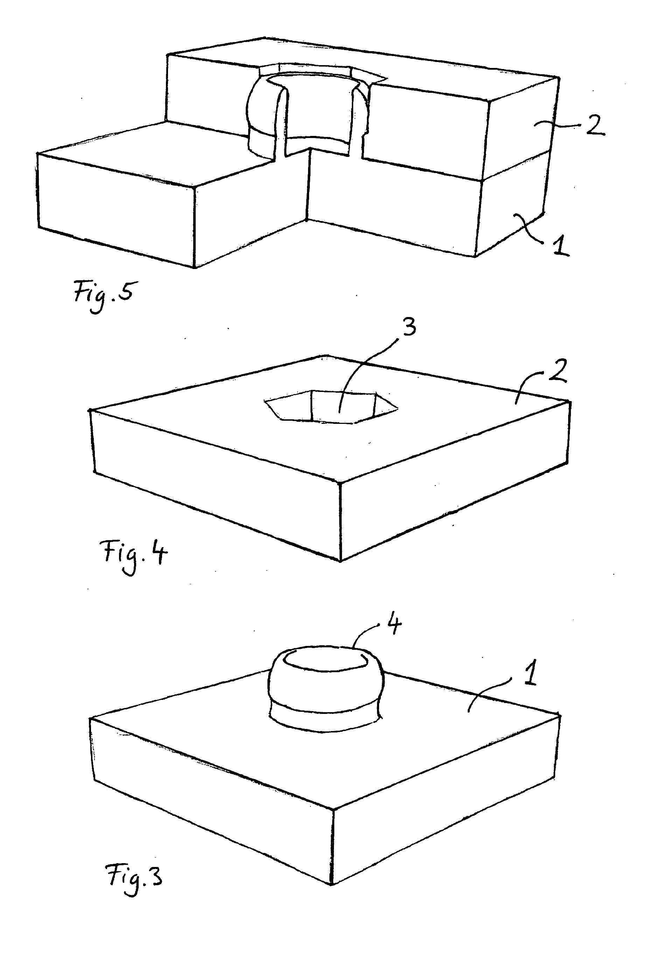

Die Figuren 3 bis 5 zeigen dreidimensionale Darstellungen des Bauelements 1, mit Zapfen 4 des Basiselements 2, mit Öffnung 3 und der Rastverbindung, die das Bauelement und das Basiselement in zusammengesetzter Darstellung zeigt, in der das Einrasten des wulstartigen Vorsprungs ersichtlich wird.

Es ist auch denkbar, alle Wände 6 der Öffnung 3 mit steg- oder absatzförmigen Vorsprüngen auszustatten, jedoch hat es sich bei der vorliegenden Erfindung gezeigt, dass einerseits durch die sechseckförmige Ausgestaltung der Öffnung 3 eine leichte Verdrehung der Elemente zueinander möglich ist, ohne dass die Verbindung leicht herausschnappt. Gleichzeitig ist ein Lösen des Bauelements vom Basiselement ohne zu großen Kraftaufwand möglich, so dass sich durch die Kombination eines rotationssymmetrischen Zapfens 4 mit einer sechseckigen Öffnung 3 eine besonders vorteilhafte Rastverbindung ergibt, die die gestellten Anforderungen, wie leichte Drehbarkeit, zuverlässige Verbindung, leichte Lösbarkeit und einfache Herstellbarkeit, erfüllt.

## Patentansprüche

1. Rastverbindung für Bauelemente mit einem Bauelement, das mit einem Basiselement verbindbar ist, indem ein erstes Rastelement (7) des Bauelements mit einem zweiten Rastelement (5) des Basiselements in Eingriff bringbar ist, wobei sich das zweite Rastelement (5) innerhalb einer Öffnung (3) im Basiselement (2) befindet,
**dadurch gekennzeichnet,**
**dass** das erste Rastelement (7) einen wulstartigen Vorsprung mit einem Wulstdurchmesser (P1) und das zweite Rastelement (5) einen steg- oder absatzförmigen Vorsprung an mindestens einer Wand (6) der Öffnung (3) aufweist.

2. Rastverbindung nach Anspruch 1,
**dadurch gekennzeichnet,**
**dass** der Rastabstand (B2) zwischen dem mindestens einen stegoder absatzförmigen Vorsprung und der innerhalb der Öffnung (3) gegenüberliegenden Wand (6) kleiner oder gleich ist als der Wulstdurchmesser (P1).

3. Rastverbindung nach Anspruch 1 oder 2,
**dadurch gekennzeichnet,**
**dass** das zweite Rastelement (5) mindestens zwei steg- oder absatzförmige Vorsprünge an jeweils einer Wand (6) der Öffnung (3) aufweist.

4. Rastverbindung nach Anspruch 3,
**dadurch gekennzeichnet,**
**dass** sich die mindestens zwei steg- oder absatzförmigen Vorsprünge an gegenüberliegenden Wänden (6) der Öffnung (3) befinden und der Rastabstand (B2) zwischen den mindestens zwei gegenüberliegenden steg- oder absatzförmigen Vorsprüngen kleiner oder gleich ist als der Wulstdurchmesser (P1).

5. Rastverbindung nach einem der vorhergehenden Ansprüche,
**dadurch gekennzeichnet,**
**dass** sich der steg- oder absatzförmige Vorsprung innerhalb der Öffnung (3) über eine Absatztiefe (T2) erstreckt, die kleiner ist als die Öffnungstiefe (T1) der Öffnung (3).

6. Rastverbindung nach einem der vorhergehenden Ansprüche,
**dadurch gekennzeichnet,**
**dass** sich der steg- oder absatzförmige Vorsprung an der dem einzusteckenden Bauelement (1) zugewandten Seite der Öffnung (3) befindet.

7. Rastverbindung nach einem der vorhergehenden Ansprüche,
**dadurch gekennzeichnet,**
**dass** die Öffnung (3) sechs Wände (6) aufweist, wobei sich die steg- oder absatzförmigen Vorsprünge an zwei gegenüberliegenden Wänden (6) befinden.

8. Rastverbindung nach einem der vorhergehenden Ansprüche,
**dadurch gekennzeichnet,**
**dass** sich der wulstartige Vorsprung des ersten Rastelements (7) domförmig entlang eines Zapfens (4) erstreckt, der am Bauelement (1) befestigt ist.

9. Rastverbindung nach einem der vorhergehenden Ansprüche,
**dadurch gekennzeichnet,**
**dass** der Zapfen (4) und das Bauelement (1) einstückig, insbesondere aus einem flexiblen Plastikmaterial hergestellt sind.

10. Rastverbindung nach einem der vorhergehenden Ansprüche,
**dadurch gekennzeichnet,**
**dass** der Zapfen (4) rotationssymmetrisch mit einem Hohlraum (10) ausgebildet ist, so dass sich die Zapfenwand (8) beim Einrasten des Zapfens (4) in das zweite Rastelement (5) nach Innen, in Richtung des Hohlraums (10) verschiebt.

11. Rastverbindung nach einem der vorhergehenden Ansprüche,
**dadurch gekennzeichnet,**
**dass** sich an der Außenseite der Zapfenwand (8) zwischen dem wulstartigen Vorsprung des ersten Rastelements (7) und dem Körper des Bauelements (1) eine Hinterschneidung (9) befindet, die den steg- oder absatzförmigen Vorsprung des zweiten Rastelements (5) nach dem Einrasten aufnimmt.

12. Bauelement (1) mit einem Zapfen (4) für eine Rastverbindung nach einem der vorhergehenden Ansprüche,
**dadurch gekennzeichnet,**
**dass** der Zapfen (4) ein erstes Rastelement (7) mit einem wulstartigen Vorsprung mit einem Wulstdurchmesser (P1) und eine Hinterschneidung (9) an der Außenseite der Zapfenwand (8) zwischen dem wulstartigen Vorsprung und dem Körper des Bauelements (1) aufweist.

13. Basiselement (2) mit einer Öffnung (3) für eine Rastverbindung nach einem der vorhergehenden Ansprüche,
**dadurch gekennzeichnet,**
**dass** die Öffnung (3) ein zweites Rastelement (5) mit einem steg- oder absatzförmigen Vorsprung an mindestens einer, insbesondere an zwei gegenüberliegenden Wänden (6) der Öffnung (3) aufweist.

14. Bausystem mit einem Basiselement (2) nach Anspruch 13 und einem Bauelement (2) nach Anspruch 12,
**dadurch gekennzeichnet,**
**dass** der Rastabstand (B2) zwischen dem steg- oder absatzförmigen Vorsprung und der innerhalb der Öffnung (3) gegenüberliegenden Wand (6) oder zwischen den gegenüberliegenden steg- oder absatzförmigen Vorsprüngen kleiner oder gleich ist als der Wulstdurchmesser (P1).
